# EUROPÄISCHE PATENTSCHRIFT

(11) **EP 1 923 583 B1**
(45) Veröffentlichungstag und Bekanntmachung des Hinweises auf die Patenterteilung: **25.04.2012**
(21) Anmeldenummer: 07120868.0
(22) Anmeldetag: 16.11.2007
(51) Int. Cl.: F16B 37/06, B23P 19/06

(54) **Stanzmutter**
Pierce nut
Ecrou embouti

(30) Priorität: 17.11.2006 DE 102006054375; 26.01.2007 DE 102007004118
(43) Veröffentlichungstag der Anmeldung: 21.05.2008
(73) Patentinhaber: NEDSCHROEF PLETTENBERG GmbH, 58840 Plettenberg (DE)
(72) Erfinder: Ferreau, Oliver, 58762 Altena (DE); Can, Metin, 58300 Wetter (DE); Hirschfeld, Henning, 58840 Plettenberg (DE)
(74) Vertreter: Dörner, Kötter & Kollegen

(56) Entgegenhaltungen:
- EP-A- 1 591 676
- WO-A-2004/037462
- WO-A-2005/050034
- GB-A- 964 492
- US-A- 3 602 974
- US-A- 5 743 691

## Beschreibung

### I. Anwendungsgebiet

Die Erfindung betrifft Stanzmuttern wie sie beispielsweise aus den DE 15 75 187, DE 36 26 466 , EP1591676 A2, WO2005050034 A1, WO2004037462 A1, GB964492 A, US3602974 A1 und US5743691 A1 bekannt sind.

### II. Technischer Hintergrund

Dabei wird die Stanzmutter in ein nicht-vorgelochtes Blech eingepresst und wirkt dabei als Stanzstempel, die einen Butzen aus dem Blech ausstanzt.

Um die notwendige drehfeste Fixierung der Stanzmutter im Blech zu erreichen, ist der im Blech steckende Schaftteil der Stanzmutter mit einem unrunden, meist polygonen Außenumfang ausgestattet.

Prinzipiell müssen dabei die so genannten Stanzmuttern, bei denen während des Einpressvorganges der Mutter in das Blech ausschließlich das Blech, aber nicht die Mutter selbst verformt wird, die ähnlich gestalteten so genannten Nietmuttern unterschieden werden, bei denen während des Einpressvorganges auch die Mutter, teilweise zusätzlich zum Blech, verformt wird, meistens im freien Ende des Schaftbereiches. Bei derartigen Stanzmuttern ist eine der wesentlichen Kenngrößen die Drehmoment-Belastbarkeit, die die eingepresste Mutter verkraften kann, bevor sie im Blech durchdreht.

Dies wird vorzugsweise durch eine Formschlussverbindung zwischen Mutter und Blech erreicht, einerseits durch die polygone Ausgestaltung des Schaftteiles, andererseits durch die Erhebungen in der Fläche der Schulter der Mutter, an welche sich durch Fließvorgänge des Bleches beim Einpressen das umgebende Blechmaterial möglichst gut anlegt.

In der Praxis hat sich jedoch herausgestellt - auch unter Berücksichtigung der Tatsache, dass heute in der verarbeitenden Industrie immer härtere und damit sprödere und damit weniger fließfähige Blechsorten eingesetzt werden - dass dieses Fließvermögen unterschätzt worden ist.

Man hat daher zunehmend versucht, die Drehmomentbelastbarkeit dadurch zu erhöhen, dass sich Erhebungen, die aus der Schulter der Mutter nach unten in Richtung Blech vorstehen, in die Blechoberfläche eingraben und Rückhalt für das zu haltende Drehmoment bieten sollen.

Bekannt ist es in diesem Zusammenhang, diese Erhebungen in Form von radial an der Schulter oder am Übergang zwischen Schulter und Schaft der Mutter vorhandene, meist linienförmige, Vorsprünge auszubilden.

### III. Darstellung der Erfindung

### a) Technische Aufgabe

Es ist daher die Aufgabe der Erfindung, eine Stanzmutter, insbesondere in Relation zu dem zu verarbeitenden Blech, so zu gestalten, dass das Lösemoment der eingepressten Mutter möglichst groß wird.

### b) Lösung der Aufgabe

Diese Aufgabe wird durch die Merkmale der Ansprüche 1 und 12 gelöst. Vorteilhafte Ausführungsformen ergeben sich aus den Unteransprüchen. Es hat sich in der Praxis herausgestellt, dass sich eine einzige, ringförmig um den Schaftumlauf in der Erhebung vor allem bei harten und spröden Blechen besser in die Bleche einpresst und ein höheres Lösungsmoment, also eine höhere Drehmomentbelastbarkeit, bietet, als eine Vielzahl kleiner, radial verlaufender Rippen oder Vorsprünge. Der Grund könnte darin liegen, dass dabei in der Summe des durch Schließvorgänge zu verlagernden Blechmaterials hier die geringere Verlagerung stattfinden muss als bei einer Vielzahl radialer Rippen oder Einzelvorsprünge.

Da eine kreisrunde, ringförmige und koaxial zu dem Schaftteil verlaufende Erhebung einer Drehmomentbelastung nur einen Kraftschluss entgegenzusetzen hätte, wird ein zusätzlicher Formschluss erzeugt, in dem die Erhebung in Axialrichtung betrachtet entweder unrund ausgebildet ist oder nicht koaxial sondern exzentrisch zum Schaft, also der Mitte des Schaftes, verläuft oder beides gleichzeitig.

Die Erhebung selbst kann im Querschnitt kegelförmig oder auch konvex ballig gekrümmt ausgebildet sein, wobei eine Kegelform vorzugsweise mit geraden Flanken oder sogar konkav durchgebogenen Flanken die leichtere Eindringbarkeit gerade bei spröden harten Blechen in das Blech besitzt bei geringerem Kraftaufwand.

Dementsprechend ist die Form der Erhebung in Abhängigkeit der Härte und damit Sprödigkeit des Bleches zu wählen:

Je härter das Blech ist, umso spitzer sollte der Querschnitt der Erhebung ausgebildet sein und umso geringer der Rundungsradius der aufeinander zulaufenden Flanken der Erhebung sein, und umso geringer sollten die in der Aufsicht betrachteten Richtungsänderungen der Erhebung ausgeprägt sein.

Für sehr harte Bleche ist daher die bevorzugte Erhebung ovalförmig und mit einem kegelförmigen, eventuell sogar mit balligen konkaven Flanken ausgebildeten Querschnitt.

Ebenso richten sich Breite und Höhe der Erhebung primär nach der Härte des Blechmaterials: Die Höhe sollte sich zwischen 10 % und 30 % der axialen Länge des Schafteils bewegen, und umso geringer sein, je härter das Blech ist.

Die Breite sollte 20 % bis 100 % der Breite der Schulter betragen, und umso geringer sein, je härter das Blech ist. Wenn die Innenflanke flacher ausgebildet ist als die Außenflanke, kann dadurch ein Doppeleffekt erreicht werden, in dem das von der Erhebung radial nach innen verdrängte Material zusätzlich in den Hinterschnitt am Übergang zwischen der Schulter und dem Schaft eingepresst wird, der sich vorzugsweise in axiale Richtung in den Kopfteil hineinerstreckt.

Dadurch, dass der Stanzstempel, also die freie Stirnfläche des Schaftteiles einerseits, und die auf der Gegenseite des Bleches angelegte Matrize, in die die Stanzmutter beim Einpressen geringfügig eintaucht, einander entsprechende Umfangskonturen und nur einen begrenzten Durchmesserunterschied besitzen, wird der Butzen zuverlässig aus dem Blechteil ausgestanzt, und fällt durch die Matrize ab. Vorzugsweise besitzt die Matrize einen runden Innendurchmesser, der wesentlich einfacher und kostengünstiger herzustellen ist als ein unrunder Durchmesser, so dass ausreichend maßhaltige Rohre und Buchsen als Fertigmatrize oder zumindest als Halbzeug zur Herstellung der Matrize kostengünstig zugekauft werden können.

Vorzugsweise besitzt auch das Schaftteil an seiner freien Stirnfläche einen runden Außendurchmesser, trotz der ansonsten polygonen Außenkontur des restlichen Schaftteiles. Denkbar wären auch übereinstimmende unrunde Konturen von Stanzstempel, also Stirnfläche des Schaftteiles, und Matrize, jedoch erhöht dies nicht nur die Herstellkosten, sondern bedingt auch eine Drehlagenpositionierung der Stanzmutter vor dem Einpressen, nämlich ausgerichtet auf die Drehlage der unrunden Matrize.

Der Unterschied zwischen dem Durchmesser der Matrize und dem Durchmesser der Stirnfläche des Schaftteiles als Stanzstempel hängt von der Dicke des Blechteiles ab und liegt bei 8 bis 12/100 mm pro mm der Blechdicke. Dabei muss die als Stanzstempel wirkende freie Stirnfläche des Schaftteiles keineswegs den größten Außendurchmesser des Schaftteiles darstellen.

Vielmehr hat sich gezeigt, dass der größte Außendurchmesser des Schaftteiles von der freien Stirnfläche aus zurückversetzt vorhanden sein sollte, und dieser größte Außendurchmesser, der sog. Pressdurchmesser, der die vom Stanzdurchmesser erzeugte Innenkontur im Blechteil radial nach außen schiebt, bereits wie der Rest des Schaftteiles polygon ausgebildet sein sollte. Zwischen dem größeren Pressdurchmesser und dem stirnseitigen Stanzdurchmesser verläuft also eine Pressschräge, die zwischen 10° und 20°, insbesondere zwischen 13° und 17°, zur Axialrichtung steht.

Dieser Abschnitt bildet jedoch keinen Kegelstumpf, sondern in dieser Pressschräge laufen die Polygonflächen, die dem Schaft zwischen dem Pressdurchmesser und dem Ansatz zum Kopfteil seine polygonförmige Gestalt geben, aus, um die gewünschte runde Außenkontur am stirnseitigen Stanzdurchmesser des Schaftteiles zu ergeben.

Als richtige axiale Länge der Pressschräge hat sich eine Länge von 5% bis 25%, insbesondere von 8% bis 15%, der axialen Länge des Schaftteiles ergeben, sowie eine Winkelabweichung von 20 - 40°, insbesondere 30 - 40° von der Axialrichtung.

Dabei ist ferner zu beachten, dass die axiale Länge des Schaftteiles kürzer sein soll als die Dicke des Bleches, in welches die Stanzmutter eingesetzt werden soll, damit die eingesetzte Pressmutter auf der Gegenseite nicht über die Kontur des Blechteiles vorsteht und dort Probleme verursacht.

Dabei ist die Differenz zwischen Schaftlänge und Blechdicke nicht immer gleich, sondern hängt einerseits von der absoluten Dicke des Bleches und andererseits von der Materialpaarung Stanzmutter/Blechteil, insbesondere dem Material des Blechteiles, ab. Als vorteilhafte Werte haben sich ergeben:

### Blech: Stahl; Mutter: Stahl

Schaftlänge 0,05 - 0,3 mm, insbesondere 0,05 - 0,1 mm, kürzer als Blechdicke und/oder Schaftlänge 1 % - 10% kürzer als Blechdicke, Unterschied in % umso kleiner, je größer Blechdicke.

### Blech: Leichtmetall; Mutter: Stahl

Schaftlänge 0,1 - 0,4 mm, insbesondere 0,1 - 0,2 mm, kürzer als Blechdicke und/oder Schaftlänge 2% - 15% kürzer als Blechdicke, Unterschied in % umso kleiner, je größer Blechdicke.

Die Blechdicke beträgt in der Regel 2 - 6 mm.

Während durch die Verkürzung des Schaftteiles gegenüber dem Blechteil zuverlässig das Überstehen der eingesetzten Mutter über die Rückseite des Blechteiles verhindert wird, wird eine hohe Prozesssicherheit hinsichtlich des Abscherens des Butzens und Herabfallens dadurch erzielt, dass beim Einpressen der Mutter die freie Stirnfläche des Schaftteiles, also die Pressfläche, die Oberseite der Matrize nicht nur erreicht, sondern geringfügig in diese eintaucht, wodurch das Abscheren des Butzens erst zuverlässig erreicht wird, zusammen mit einer ausreichend geringen Durchmesserdifferenz zwischen Außendurchmesser des Pressstempels und Innendurchmessers der Matrize.

Da der Schaftteil der Stanzmutter im montierten Zustand nicht über die Rückseite des Bleches vorstehen soll, ist dies nur erreichbar durch eine ringförmig umlaufende Aufwölbung in der Matrizenstirnfläche, deren axiale Erstreckung größer ist als der Rückstand der freien Stirnfläche des Schaftteiles gegenüber der Blechrückseite im montierten Zustand.

Die axiale Erstreckung des Matrizendurchmessers ist dabei vorzugsweise geringer als die axiale Erstreckung der Pressschräge, so dass der Matrizendurchmesser an der Matrizenstirnfläche größer als der Stanzdurchmesser des Schaftteiles und kleiner als sein Pressdurchmesser gewählt werden sollte.

Um die Drehmomentbelastbarkeit der eingesetzten Mutter nicht nur von dem Formschluss zwischen der Außenkontur des Schaftteiles und dem daran anliegenden Material des Blechteiles abhängen zu lassen, ist es bekannt, dass der schulterförmige Überstand des Mutternkopfes gegenüber dem Schaftteil nicht rechtwinklig zur axialen Richtung verläuft, sondern in Form einer schräg nach außen abfallenden Hinterschneidung, so dass bei einer unrunden Außenkontur des Kopfteiles sich die Ecken der schulterförmigen Unterseite des Kopfteiles zusätzlich in die Oberseite des Blechteiles einpressen und die Drehmomentbelastbarkeit weiter erhöhen.

Zum einen hat sich gezeigt, dass eine optimale Verhakung zwischen Schulter und Blechteil erzielt wird, wenn die nach außen unten abfallende Hinterschneidung nicht bis zum Außendurchmesser des Kopfes verläuft, sondern vorher in eine umgekehrte, nach außen oben wieder ansteigende Außenschräge übergeht. Die beste Wirkung wird erzielt, wenn die radiale Erstreckung der Außenschräge 10% bis 30%, insbesondere 15% bis 25%, der radialen Erstreckung der Schulter beträgt.

Weiterhin ist das Einpressen der Vorsprünge der Schulter in das Blechteil nur dann gegeben, wenn der Kopfteil der Stanzmutter eine polygone Außenkontur besitzt, also wenn der Kopfteil beispielsweise nach Art einer üblichen Achtkantmutter geformt ist. Für viele Anwendungsfälle sind jedoch Kopfteile mit runder Außenkontur gewünscht, da das Ansetzen eines Schraubenschlüssels oder ähnlichen Werkzeuges am Außenumfang ohnehin aufgrund der drehfesten Verbindung mit dem Blechteil nicht notwendig ist.

Um auch in diesem Fall die beschriebene Verhakungswirkung zwischen Schulter und Blechteil herbeizuführen, werden erfindungsgemäß zwei Alternativen vorgeschlagen:

Entweder verläuft - bei rundem Außendurchmesser des Kopfes - der Übergang zwischen der schräg abfallenden Hinterschneidung und der Außenschräge nicht in gleichbleibendem radialen Abstand, also ebenfalls entlang einer runden Kontur, auf der Schulter, sondern entlang einer polygonen Kontur, wodurch wiederum eine Verhakungswirkung erzielt wird.

Ein besseres Ergebnis wird jedoch erzielt, wenn die Schulter relativ zur Axialrichtung keine rotationssymmetrische Fläche darstellt, sondern eine in Umlaufrichtung gewellte oder vorzugsweise gezackte Fläche, die entweder bis zum Außendurchmesser durchgehen kann oder auch nur bis zum Übergang in die Außenschräge. Die Außenschräge selbst kann dann wiederum eine rotationssymmetrische, nicht gewellte oder gezackte, Fläche sein.

Die Verdrehsicherheit hängt somit natürlich auch von der radialen Erstreckung der Schulter ab, die umso größer sein sollte, je dünner und/oder härter das Blechteil ist.

Um eine optimale Drehmomentbelastbarkeit sicherzustellen, hat sich eine Anzahl der Polygonflächen in Umfangsrichtung zwischen 6 und 20 Flächen, insbesondere zwischen 8 und 15 Flächen als am sinnvollsten erwiesen, in Abhängigkeit von der Größe der Mutter, also in Richtung zur oberen Grenze bei großen Mutterndurchmesser und umgekehrt. Vorzugsweise sollte somit die Anzahl an Polygonflächen das 1,0-fache bis 1,2-fache des Pressdurchmessers gemessen in Millimeter betragen.

Durch die Anordnung einer oder gar mehrerer Ringnuten im Schaftumfang werden weitere Hinterschneidungen zur Verfügung gestellt, in die Blechmaterial beim Einsetzen der Mutter einfließen kann, und die das vor allem axiale Herausziehen der Mutter erschweren, bei nicht umlaufender Ringnut auch das Ausdrehen erschweren.

Um eine optimal festsitzende Mutter im Blech zu erreichen, soll bewirkt werden, dass die Aufwölbung der Matrize ein Fließen des Blechmaterials in den Hinterschnitt an der Mutter hinein bewirkt. Hierfür darf sich diese Aufwölbung nicht bereits beim Stanzvorgang der Mutter vollständig im Blech einprägen.

Um dies zu vermeiden wird - sofern die Größe des Außenumfanges des Kopfes der Mutter nicht verändert werden kann - die Größe des Stanzdurchmessers der Matrize verändert, um zwei im Grunde widersprüchliche Forderungen gleichzeitig zu erfüllen:

Einerseits wird der Stanzdurchmesser der Matrize so gering gewählt, dass während des Stanzens der Stanzmutter im Blech, also bis die Schulter der Stanzmutter die Blechoberfläche erreicht, die Aufwölbung der Matrize noch nicht vollständig im Blech eingedrungen ist.

Auf der anderen Seite wird der Durchmesser der Matrize zumindest so groß gewählt, dass erst nach dem Einprägen der Schulter des Mutterkopfes im Blech die Aufwölbung der Matrize vollständig auf der Gegenseite ins Blech eindringt bis zur Anlage an der Planfläche der Matrize.

Alternativ oder auch ergänzend zu dieser Wahl der Matrizengröße kann auch ein Stempel mit einem die Stanzmutter umlaufenden Ringflansch gewählt werden, dessen axiale Erstreckung so gewählt ist, dass sich der Ringflansch mit seiner Stirnfläche auf dem Blech abstützt und auf diesem gegebenenfalls auch einprägt, wenn die Stanzmutter die richtige Einpresstiefe erreicht hat. Dadurch stützt sich der Stempel mit diesem Ringflansch gegenüber der vorzugsweise einen gleich großen Außendurchmesser besitzenden Matrize ab. Dies hat erhebliche Vorteile:

Einerseits kann das richtige Einsetzen der Mutter kontrolliert werden, indem sich dann eine Kontrollmarkierung am Blech im Radialbereich außerhalb der Mutter, nämlich zwischen Ringflansch des Stempels und Planfläche der Matrize, ausbildet.

Des weiteren wird durch den ebenfalls anpressenden Ringflansch die Verfüllung des Hinterschnittes der Schulter der Stanzmutter optimiert, der Eindrückweg des Achtkants ist definiert, die Reproduzierbarkeit des Einpressvorganges wird verbessert und damit die Ausdrückkräfte und die Ausdrehmomemte in einen definierten Bereich gehalten, ohne die Geometrie der Stanzmutter verändern zu müssen.

Vor allem aber ist es dadurch möglich, die Anpressfläche gegen das Blech von der Seite des Mutternkopfes her zu verändern und damit die Relation zur Fläche des Stanzdurchmesser und der Aufwölbung der Matrize, ohne die letztere ändern zu müssen.

Die Führung der Mutter wird dabei verbessert indem die Innenkontur des Ringflansches möglichst genau der Außenkontur des Mutternkopfes entspricht, also insbesondere einen Innensechskant besitzt und/oder die Mutter möglichst gut im Inneren von einem Konus oder besser einem zentralen Führungszapfen des Stempels geführt wird.

### c) Ausführungsbeispiele

Ausführungsformen gemäß der Erfindung sind im Folgenden beispielhaft näher beschrieben. Es zeigen:
- Fig. 1:: Stanzmutter und Matrize in unterschiedlichen Bewegungszuständen,
- Fig. 2:: eine Aufsicht auf die Stanzmutter von unten,
- Fig. 3:: eine Seitenansicht der Stanzmutter der Fig. 2, und
- Fig. 4:: eine geänderte Einstanzmuttern-Vorrichtung.

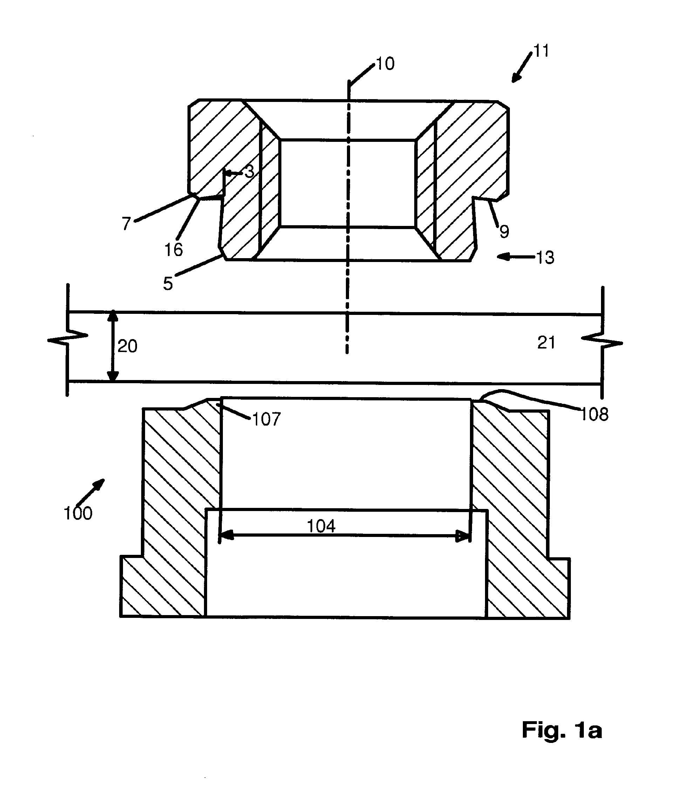

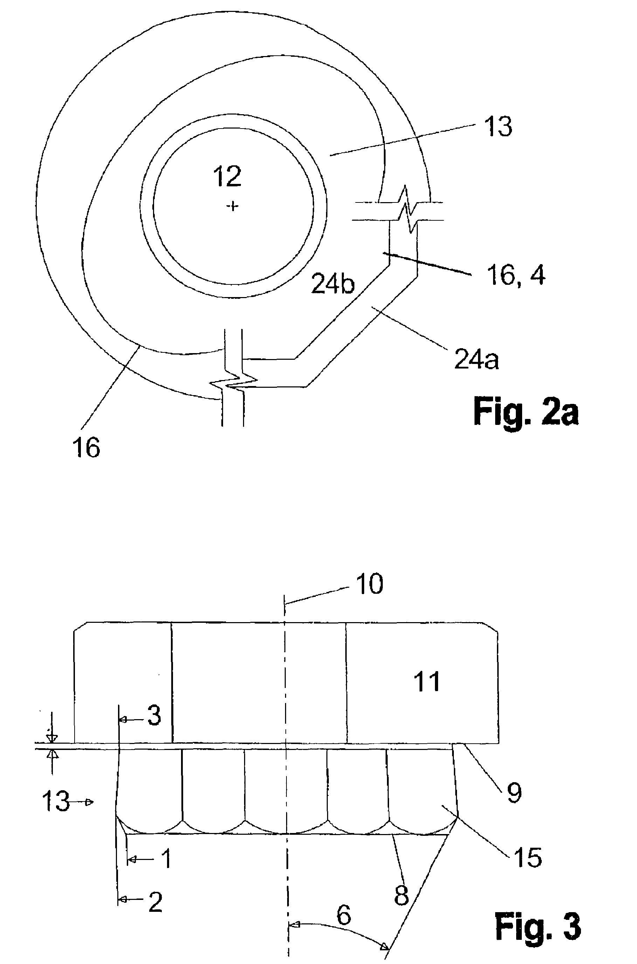

Die Fig. 1a und 3 lassen die Grundform der Stanzmutter am einfachsten erkennen, mit einem Schaftteil 13 und einem demgegenüber breiteren Kopfteil 11, die sich in Axialrichtung 10 aneinander anschließen, vorzugsweise einstückig miteinander ausgebildet sind und - bis auf die polygonen Außenkonturen - rotationssymmetrisch ausgebildet sind.

Kopf 11 als auch Schaft 13 sind von einer Gewindebohrung 12 durchdrungen, die vorzugsweise als Durchgangsbohrung ausgebildet ist, jedoch auch eine Sacklochbohrung sein könnte mit einer dann geschlossenen freien Stirnfläche 8 am Schaftteil 13.

Der Außenumfang des Schaftteiles 13 ist über den Hauptteil seiner Länge als polygon gestaltet mit schräg nach außen zum freien Ende des Schaftteiles hin abfallenden oder auch parallel zur Axialrichtung 10 verlaufenden Polygonflächen 15.

Die Polygonflächen 15 gehen nicht bis zur freien Stirnfläche 8 des Schaftteiles 13 durch, da der größte Durchmesser des Schaftteiles 13 nicht der Stanzdurchmesser 1 am vorderen freien Ende, also der Stirnfläche 8, ist, sondern ein demgegenüber zurück versetzter, größerer Pressdurchmesser 2.

Die Polygonflächen 15 laufen im Bereich der Pressschräge 5 zwischen dem Stanzdurchmesser 1 und dem Pressdurchmesser 2 aus, wodurch der Pressdurchmesser 2 hinsichtlich des Umfanges eine polygone Kontur ergibt, der Stanzdurchmesser 1 dagegen eine runde Kontur.

Fig. 2a zeigt in der Aufsicht auf die Schulter 9 von unten in axialer Richtung zwei verschiedene erfindungsgemäße Lösungen:

Im rechten unteren Segment eine Lösung, bei der eine Erhebung 16 unrund, nämlich in Form eines Polygonzuges, koaxial um den Schaftteil 13 herumläuft.

Die Flanken 24a, 24b der Erhebung 16 treffen sich dabei in einer ringförmigen, umlaufenden Kante 4, die relativ scharf ausgebildet ist und ein Achteck bildet.

In den übrigen Segmenten ist in Fig. 2a dagegen eine elliptische Erhebung 16 dargestellt, die um den Schaftteil 13 herum verläuft und durch ihre unrunde Form eine Verdrehung der eingestanzten Mutter verhindert.

Auch eine runde, kreisförmige Erhebung wäre möglich, so lange sie nicht koaxial sondern exzentrisch versetzt und um den Schaftteil 13 herum verläuft.

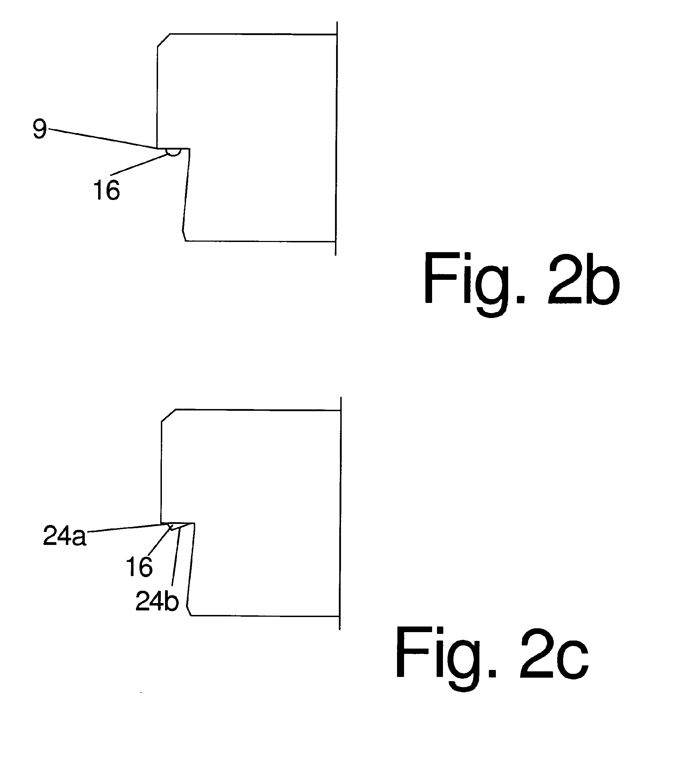

In den Figuren 2b und 2c sind mögliche Querschnittsformen der Erhebung 16 dargestellt: Fig. 2b zeigt eine etwa halbkreisförmige Erhebung, die primär bei weicheren Blechsorten geeignet ist, und eine Breite von etwa 50% der Breite der Schultern 9 aufweist.

Fig. 2c zeigt eine Erhebung 16 mit kegeliger Querschnittsform, allerdings ungleich steilen Flanken 24a, b, wobei die innere Flanke 24b flacher und die äußere steiler ausgebildet ist, während im rechten unteren Segment der Fig. 2a eine solche kegelförmige Erhebung die gesamte Breite der Schultern 9 einnimmt, ist die Erhebung der Fig. 2c nur über etwa 2 Drittel der Breite der Schulter 9 ausgeführt, so dass am radial inneren und äußeren Rand ein jeweils ebener Schulterbereich verbleibt.

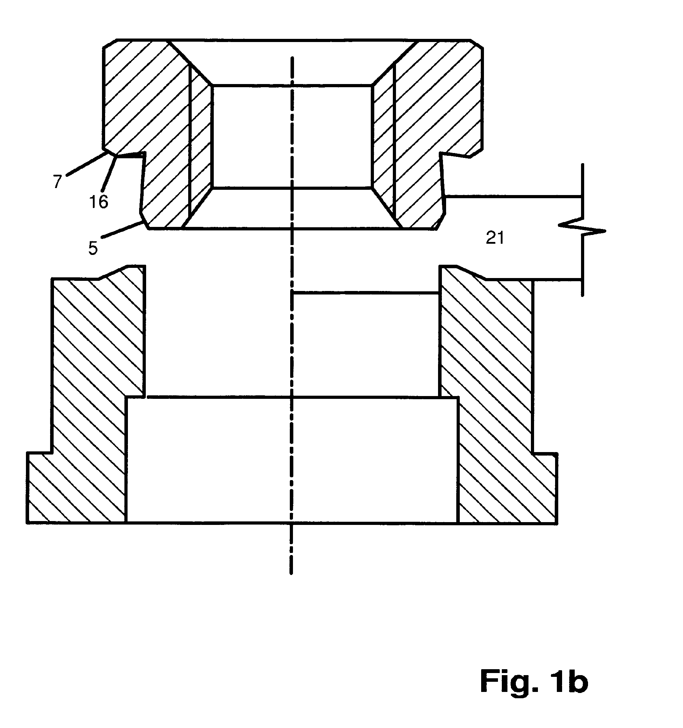

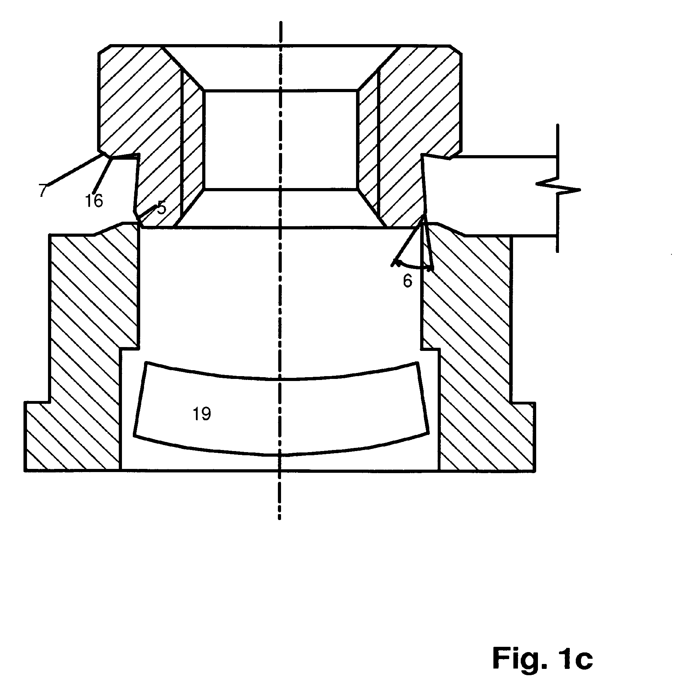

Wie Fig. 1b zeigt, stanzt der kleinere Stanzdurchmesser 1 primär den Butzen 19 aus, indem er ihn - wie vor allem Fig. 1c zeigt - gegenüber dem Matrizendurchmesser 104 abschert. Der in Einpressrichtung weiter hinten liegende Pressdurchmesser 2 vergrößert die Einpressöffnung durch Verdrängen des umgebenden Blechmaterials, erreicht jedoch die Matrize 100 nicht mehr, da deren Stirnflächen, insbesondere die dort vorhandene Aufwölbung 107, auch am Ende der Einpressbewegung diesen Pressdurchmesser 2 in der Regel nicht mehr erreicht. Die Aufwölbung 107 zusammen mit den sich in der Oberseite des Bleches durch die Hinterschneidung des Schaftteiles 13 gebildeten Erhebungen in der Schulter 9 des Kopfteiles 11 bewirken ein Fließen des Blechmaterials an dem hinterschnittenen Schaftteil 13 und die formschlüssige Anlage an dessen Polygonflächen 15.

Um mittels der Hinterschneidung in der Schulter 9 des Kopfteiles 11 ebenfalls eine drehfeste Verhakung der Stanzmutter im Blechteil zu bewirken, selbst bei rundem Außenumfang des Kopfes, sind mehrere Ausformungen, auch in Kombination miteinander, möglich.

Wie die Aufsicht auf die Schulter 9 in der Fig. 2 und auch den Fig. 1 zeigt, wird bevorzugt die Hinterschneidung nicht bis zum Außenumfang fortgesetzt, sondern geht vor Erreichen des äußeren Randes in eine Außenschräge 7 über. Die dadurch vom äußeren Rand nach innen versetzte Erhebung 16 läuft bei einer nicht runden Außenkontur des Kopfes 11, wie in der rechten Hälfte der Fig. 2 dargestellt, ebenfalls unrund um und ergibt bereits eine drehfeste, formschlüssige Verbindung gegenüber dem Blech.

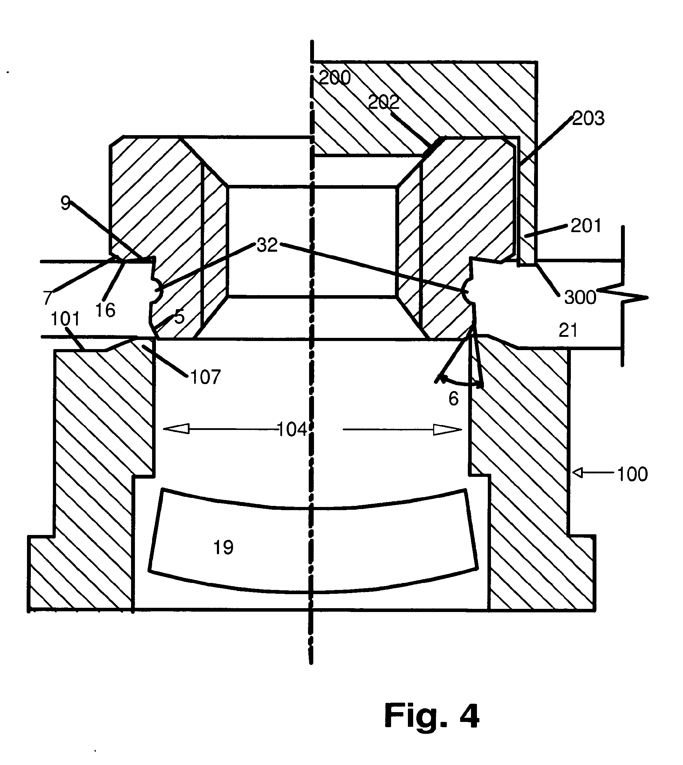

Figur 4 zeigt eine Bauform der gesamten Vorrichtung in einem Längsschnitt analog zu Figur 1c mit weiteren Verbesserungen:

Zum einen ist im Schaftteil 13 der Stanzmutter im Außenumfang eine Ringnut 32 angeordnet, die hier einen bogenförmigen, d. h. halbkreisförmigen, Querschnitt besitzt und zumindest die am weitesten nach außen ragenden Bereiche, die Kanten des Schaftteiles 13 durchschneidet, und vorzugsweise umlaufend im gesamten Schaftteil 13 vorhanden ist.

Dadurch wird die Ausziehbarkeit erschwert, da auch in diesem - in axialer Richtung als Hinterschnitt wirkender Nut - Material einfließen kann.

Des Weiteren ist in der rechten Bildhälfte der die Stanzmutter in Richtung Matrize 100 pressende Stempel 200 dargestellt, der in diesem Fall einen außen um die Stanzmutter umlaufenden Ringflansch 201 aufweist.

Dieser Ringflansch 201 dient der verbesserten Führung der Stanzmutter, vor allem aber ist die axiale Länge des Ringflansches 201 in Relation zur axialen Länge Stanzmutter und insbesondere deren Kopfteil 11 so gewählt, dass bei korrekter Einpresstiefe der Mutter in das Blech 21 der Ringflansch 201 sich bereits ebenfalls in der Oberseite des Bleches 21 einprägt und dort eine Markierungsprägung 300 hinterlässt.

Im Zentrum des Stempels 200 kann ein Konus 202 gegen die Stanzmutter vorstehen zur Anlage an der Anschrägung des Innengewindes der Stanzmutter, was ebenfalls die Führung und Zentrierung der Mutter erleichtert.

Der Innenumfang des Ringflansches 201 ist dabei entsprechend der Außenkontur des Kopfteiles der Stanzmutter geformt, beispielsweise mit einem Innensechskant 203 bei einem Sechskantkopf der Stanzmutter.

Wie an der Stellung der Matrize 100 auf den beiden Seiten der Figur 4 zu erkennen, sind in den beiden Bildhälften unterschiedliche Zustände des Einspressvorganges dargestellt:

In der rechten Hälfte ist der Einpressvorgang beendet, was sich darin äußerst, dass die Matrizen-Planfläche 101 an der Unterseite des Bleches 21 anliegt, und der Ringflansch 201 sich in der Oberseite des Bleches 21 bereits eingeprägt hat.

Die linke Bildhälfte zeigt den Zustand kurz vorher, was darin ersichtlich ist, dass die Aufwölbung 107 der Matrize sich noch nicht vollständig im Blech 21 eingeprägt hat und damit der Fließvorgang des Bleches 21 noch nicht abgeschlossen ist.

### BEZUGSZEICHENLISTE

- 1: Stanzdurchmesser
- 2: Pressdurchmesser
- 3: Halsdurchmesser
- 4: Kanten
- 5: Pressschräge
- 6: Presswinkel
- 7: Außenschräge
- 8: Stirnfläche
- 9: Schulter
- 10: Axialrichtung
- 11: Kopf
- 12: Gewindebohrung
- 13: Schaftteil
- 15: Polygonfläche
- 16: Erhebung
- 17: konkaver Radius
- 18: konkaver Radius
- 19: Butzen
- 20: Blechdicke
- 21: Blech
- 22: Konkave Tiefe
- 23: Zwischenwinkel
- 24a,b: Flanke
- 30: Tangentialrichtung
- 100: Matrize
- 104: Matrizen-Durchmesser
- 107: Aufwölbung
- 108: Aufwölbungs-Stirnfläche

## Patentansprüche

1. Stanzmutter mit einem Kopf (11), einem demgegenüber um eine Schulter (9) zurückversetzten, schmaleren Schaftteil (13) mit polygonem, aus Polygonflächen (15) gebildeten Außendurchmesser, wobei in der Schulter (9) wenigstens eine unrunde, ringförmig um die Axialrichtung (10) umlaufende Erhebung (16) angeordnet ist, **dadurch gekennzeichnet, dass** die Erhebung elliptisch ausgebildet und/oder nicht koaxial zur Längsachse der Stanzmutter angeordnet ist, sondern exzentrisch hierzu, aber umlaufend um den Schaftteil (13).

2. Stanzmutter nach Anspruch 1, **dadurch gekennzeichnet, dass** die gegeneinander laufenden inneren und äußeren Flanken (24a, b) der Erhebung (16) unter einem Flankenwinkel von höchstens 60°, insbesondere höchstens 45° gegeneinander streben.

3. Stanzmutter nach Anspruch 2, **dadurch gekennzeichnet, dass** die Erhebung (16) eine Höhe von mindestens 5% der axialen Länge des Schaftteiles (13), besser mindestens 10%, aufweisen, und/oder dass die Erhebung (16) eine Breite von 20% bis 100%, insbesondere von 20% bis 40% der radialen Erstreckung der Schulter (9) aufweist.

4. Stanzmutter nach einem der vorhergehenden Ansprüche, **dadurch gekennzeichnet, dass** die Innenflanke (24b) flacher ausgebildet ist als die Außenflanke (24a), insbesondere bei Erhebungen (16), die in der radial inneren Hälfte der Schulter (9) angeordnet sind, und/oder dass die unrunde Ringform der Erhebung (16) ein Polygon ist, und/oder dass die unrunde Ringform der Erhebung (16) ein Oval ist, und/oder dass die ringförmige Kante (4) der Erhebung (16), mit der die Flanken (24a, b) gegeneinander streben, einen Rundungsradius von höchstens 0,2 mm, insbesondere von höchstens 0,1 mm aufweist.

5. Stanzmutter nach einem der vorhergehenden Ansprüche, **dadurch gekennzeichnet, dass** die als Stanzstempel wirkende Stirnfläche (8) des Schaftteiles (13) einen runden Stanzdurchmesser(1) aufweist, und/oder dass der Presswinkel (6) zwischen 10° und 20°, insbesondere zwischen 13° und 17°, insbesondere 15°, beträgt.

6. Stanzmutter nach einem der vorhergehenden Ansprüche, **dadurch gekennzeichnet, dass** die axiale Länge der Pressschräge (5) zwischen 5% und 25%, insbesondere zwischen 8% und 15% der axialen Länge des Schaftteiles (13) beträgt, und/oder dass die vom Schaftteil (13) nach außen schräg abfallende Hinterschneidung (14) vor dem Außendurchmesser des Kopfes (11) endet und in eine Außenschräge (7) übergeht, die nach außen ansteigt, und insbesondere die radiale Erstreckung der Außenschräge (7) zwischen 10% und 30%, insbesondere zwischen 15% und 25%, der radialen Erstreckung der Schulter (9) beträgt.

7. Stanzmutter nach einem der vorhergehenden Ansprüche, **dadurch gekennzeichnet, dass** der Schrägstellungswinkel der Außenschräge (7) gegenüber der Querebene zur axialen Richtung (10) zwischen 10° und 30°, insbesondere zwischen 15° und 25° beträgt, und/oder dass die Schulter (9) relativ zur Axialrichtung (10) auch bei rundem Außendurchmesser des Kopfes (11) keine rotationssymmetrische Fläche ist, sondern eine in Umlaufrichtung gewellte oder gezackte Fläche, insbesondere bei rundem Außendurchmesser des Kopfes (11), und/oder dass die wellige oder zickzackförmige Schulterfläche (9) zwischen 4 und 16, insbesondere zwischen 6 und 8 Erhebungen bzw. Täler über den Umfang aufweist.

8. Stanzmutter nach einem der vorhergehenden Ansprüche, **dadurch gekennzeichnet, dass** der Halsdurchmesser (3) maximal um 10%, besser nur um 7% geringer ist als der Pressdurchmesser (2).

9. Stanzmutter nach einem der vorhergehenden Ansprüche, **dadurch gekennzeichnet, dass** im Außenumfang des Schaftteiles (13) eine Ringnut (32) angeordnet ist, die wenigstens die radial am weitesten nach außen ragenden Kanten (4) zwischen den Flächen (15) durchschneidet, insbesondere über den Umfang umlaufend durchgeht.

10. Stanzmutter nach einem der vorhergehenden Ansprüche, **dadurch gekennzeichnet, dass** die Ringnut (32) einen bogenförmigen Querschnitt besitzt, und/oder die Stanzmutter eine zentrale Durchgangsöffnung ohne Innengewinde besitzt zum Zusammenwirken mit einer selbstschneidenden Schraube.

## Claims

1. Pierce nut with a head (11), a narrower shaft section (13) with a polygonal outer diameter formed of polygonal surfaces (15) set back from it by a shoulder (9), where at least one non-circular ring-shaped elevation (16) is arranged in the shoulder around the axial direction (10), the elevation is formed elliptically and/or is not arranged co-axially with the lengthwise axis of the pierce nut but eccentrically to it, but running around the circumference of the shaft part (13).

2. Pierce nut according to claim 1, **characterised in that** the inner and outer flanks (24a, b) of the elevation (16) running towards one another tend towards one another at a flank angle of 60° at most, but in particular 45° at most.

3. Pierce nut according to claim 2, **characterised in that** the height of the elevation (16) is at least 5 % of the axial length of the shaft part (13) but preferably at least 10 %, and/or that the width of the elevation (16) is between 20 % and 100 % of the radial extent of the shoulder (9), but preferably between 20 % and 40 %.

4. Pierce nut according to any of the above claims, **characterised in that** the inner flank (24b) is flatter than the outer flank (24a), especially in the case of elevations (16) which are arranged in the radially inner half of the shoulder (9) and/or that the non-circular ring shape of the elevation (16) is a polygon and/or that the non-circular ring shape of the elevation (16) is an oval, and/or that the ring-shaped edge (4) of the elevation (16) with which the flanks (24a, b) tend towards one another has a rounded-end radius of 0,2 mm at most, or preferably of 0,1 mm at most.

5. Pierce nut according to any of the above claims, **characterised in that** the front surface (8) of the shaft part (13) acting as a piercing punch has a round punching diameter (1) and/or that the pressing angle (6) is between 10° and 20°, particularly between 13° and 17° and preferably 15°.

6. Pierce nut according to any of the above claims, **characterised in that** the axial length of the pressing bevel (5) is between 5 % and 25 % or preferably between 8 % and 15 % of the axial length of the shaft part (13), and/or that the undercut (14) sloping outwards from the shaft part (13) ends before the outer diameter of the head (11) and passes over into an outer bevel (7) which rises towards the outside and that in particular the radial extent of the outer bevel (7) is between 10 % and 30 % but preferably between 15 % and 25 % of the radial extent of the shoulder (9).

7. Pierce nut according to any of the above claims, **characterised in that** the angle of the outer bevel (7) is between 10° and 30° but preferably between 15° and 25° with reference to the plane transverse to the axial direction (10), and/or that the shoulder (9) is not a rotationally symmetrical surface with reference to the axial direction (10) even when the outer diameter of the head (11) is round, but an undulating or serrated surface in circumference direction, in particular where the outer diameter of the head (11) is round, and/or that the undulating or serrated surface of the shoulder (9) has between 4 and 16 or preferably between 6 and 8 peaks or valleys over the circumference.

8. Pierce nut according to any of the above claims, **characterised in that** the diameter of the neck (3) is at most 10 % or preferably only around 7 % less than the pressing diameter (2).

9. Pierce nut according to any of the above claims, **characterised in that** a ring groove (32) is arranged in the outer diameter of the shaft part (13) which at least cuts across the edges (4) projecting radially furthest outwards between the surfaces (15) but preferably continues around the entire circumference.

10. Pierce nut according to any of the above claims, **characterised in that** the ring groove (32) has an arc-shaped cross section and/or the pierce nut has a central through-hole with no thread in order to receive a self-tapping screw.

## Revendications

1. Écrou embouti comprenant une tête (11), en face une tige (13) plus étroite en retrait autour d'un épaulement (9), avec une périphérie extérieure polygonale formée par les surfaces (15) d'un polygone, sachant que dans l'épaulement (9) est agencée au moins une bosse (16) non arrondie présentant un tracé périphérique annulaire autour de la direction axiale (10), **caractérisé en ce que** la bosse est configurée elliptique et/ou agencée non pas coaxialement à l'axe longitudinal de l'écrou embouti mais concentriquement audit axe, autour de la tige (13).

2. Écrou embouti selon la revendication 1, **caractérisé en ce que** les flancs (24a, b) intérieurs et extérieurs à tracés antagonistes que comporte la bosse (16) tendent l'un à la rencontre de l'autre sous un angle de flanc de 60° maximum, en particulier de 45° maximum.

3. Écrou embouti selon la revendication 2, **caractérisé en ce que** la bosse (16) présente une hauteur représentant au moins 5 % de la longueur axiale de la tige (13), de préférence au moins 10 %, et/ou que la bosse (16) présente une largeur représentant entre 20 et 100 %, en particulier 20 et 40 % de l'étendue radiale de l'épaulement (9).

4. Écrou embouti selon l'une des revendications précédentes, **caractérisé en ce que** le flanc intérieur (24b) est configuré plus plat que le flanc extérieur (24a), en particulier avec les bosses (16) qui sont agencées dans la moitié intérieure radiale de l'épaulement (9), et/ou **en ce que** la forme annulaire non circulaire de la bosse (16) est un polygone, et/ou **en ce que** la forme annulaire non circulaire de la bosse (16) est une ovale, et/ou **en ce que** l'arête annulaire (4) de la bosse (16) avec laquelle les flancs (24a, b) tendent l'un contre l'autre, présente un rayon d'arrondi de 0,2 mm maximum, en particulier de 0,1 mm maximum.

5. Écrou embouti selon l'une des revendications précédentes, **caractérisé en ce que** la surface frontale (8) de la tige (13), surface qui officie de poinçon emboutisseur, présente une périphérie (1) d'emboutissage circulaire et/ou **en ce que** l'angle (6) de sertissage est compris entre 10 et 20°, en particulier entre 13 et 17°, qu'il est en particulier de 15°.

6. Écrou embouti selon l'une des revendications précédentes, **caractérisé en ce que** la longueur axiale du chanfrein (5) de sertissage est comprise entre 5 et 25 %, en particulier entre 8 et 15 % de la longueur axiale de la tige (13), et/ou que la contre-dépouille (14) en descente oblique vers l'extérieur depuis la tige (13) se termine devant la périphérie extérieure de la tête (11) et devient un chanfrein extérieur (7) augmentant en direction de l'extérieur, et en particulier **en ce que** l'étendue radiale du chanfrein extérieur (7) représente entre 10 et 30 %, en particulier entre 15 et 25 % de l'étendue radiale de l'épaulement (9).

7. Écrou embouti selon l'une des revendications précédentes, **caractérisé en ce que** l'angle d'inclinaison du chanfrein extérieur (7) par rapport au plan transversal de la direction axiale (10) est compris entre 10 et 30°, en particulier entre 15 et 25°, et/ou **en ce que** l'épaulement (9), relativement à la direction axiale (10), n'est pas une surface à symétrie de révolution même lorsque la périphérie extérieure de la tête (11) est circulaire, mais qu'il présente une surface ondulée ou dentée dans le sens de rotation, en particulier lorsque la périphérie extérieure de la tête (11) est circulaire, et/ou **en ce que** la surface d'épaulement (9) ondulée ou en zigzag présente entre 4 et 16 bosses et creux, en particulier entre 6 et 8 bosses et creux sur la périphérie.

8. Écrou embouti selon l'une des revendications précédentes, **caractérisé en ce que** le diamètre (3) du collet est inférieur de 10 %, de préférence de seulement 7 % au diamètre de sertissage (2).

9. Écrou embouti selon l'une des revendications précédentes, **caractérisé en ce que** sur la périphérie extérieure de la tige (13) est agencée une gorge annulaire (32) qui coupe au moins les arêtes (4) faisant radialement saillie le plus loin vers l'extérieur entre les surfaces (15), gorge qui en particulier présente un tracé continu sur toute la périphérie.

10. Écrou embouti selon l'une des revendications précédentes, **caractérisé en ce que** la gorge annulaire (32) possède une section arquée et/ou **en ce que** l'écrou embouti possède un orifice central de passage traversant sans taraudage, destiné à interagir avec une vis autotaraudeuse.
